(19) Europäisches Patentamt
European Patent Office
Office européen des brevets

(11) **EP 4 220 102 A1**

(12) **EUROPÄISCHE PATENTANMELDUNG**

(43) Veröffentlichungstag:
**02.08.2023 Patentblatt 2023/31**

(21) Anmeldenummer: **23151522.2**

(22) Anmeldetag: **13.01.2023**

(51) Internationale Patentklassifikation (IPC):
**G01F 23/263** (2022.01) **G01F 23/80** (2022.01)

(52) Gemeinsame Patentklassifikation (CPC):
**G01F 23/265; G01F 23/268; G01F 23/804**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **31.01.2022 DE 102022102193**

(71) Anmelder: **Technische Universität Dortmund**
**44227 Dortmund (DE)**

(72) Erfinder:
• **Stefan, Palzer**
  **44227 Dortmund (DE)**
• **Gabriel, Rodriguez Gutiérrez**
  **44379 Dortmund (DE)**
• **Alvaro, Ortz Perez**
  **44139 Dortmund (DE)**
• **Yixing, Ouyang**
  **shanghai (CN)**

(74) Vertreter: **Michalski Hüttermann & Partner**
**Patentanwälte mbB**
**Kaistraße 16A**
**40221 Düsseldorf (DE)**

(54) **FÜLLSTANDSSENSOR ZUR MESSUNG DES FÜLLSTANDS EINES FLUIDS IN EINEM TANK**

(57) Die Erfindung betrifft einen Füllstandssensor (1) zur Messung des Füllstands eines Fluids (2) in einem Tank (3), mit einer Füllstandssonde (4) und einer Messschaltung (7), wobei die Füllstandssonde (4) eine Mehrzahl von hintereinander angeordneten Paaren mikromechanischer Elektroden (5) aufweist, die jeweils einen mikromechanischen Kondensator (6) bilden, wobei die mikromechanischen Elektroden (5) eines jeden mikromechanischen Kondensators (6) jeweils in einem festen Abstand (d1) voneinander angeordnet sind und das Volumen zwischen den mikromechanischen Elektroden (5) eines jeden mikromechanischen Kondensators (6) bei der Verwendung der Füllstandssonde (4) in einem Tank (3) für ein in dem Tank (3) befindliches Fluid (2) frei zugänglich ist, und die Messschaltung (7) derart ausgestaltet und mit den mikromechanischen Kondensatoren (6) verbunden ist, dass die Kapazitäten der einzelnen mikromechanischen Kondensatoren (6) messbar sind. Auf diese Weise wird ein Füllstandssensor (1) zur Messung des Füllstands eines Fluids (2) in einem Tank (3) bereitgestellt, der für beliebige Tankformen und Tankarten ohne großen Kalibrierungsaufwand flexibel eingesetzt werden kann.

Fig. 1

## Beschreibung

Die Erfindung betrifft einen Füllstandssensor zur Messung des Füllstands eines Fluids in einem Tank, mit einer Füllstandssonde und einer Messschaltung.

Zur großflächigen Überwachung von Tankanlagen, insbesondere zur Überwachung verschiedener Füllstände von Fluiden in unterschiedlichen Tanks, sind präzise, kostengünstige, wartungsarme, einfach zu installierende und stabile Sensorsysteme die Grundvoraussetzung. Für Betreiber und Nutzer von Tankanlagen sind darüber hinaus die kabellose Überwachung der Tanknutzung und der Bestimmung des Tankinhalts von hohem wirtschaftlichem Interesse, um beispielsweise Diebstahl auf Betriebshöfen und Baustellen zu erschweren oder Informationen über die tatsächliche Nutzung der Tanks zu erhalten. Daher besteht ein hoher Bedarf an Sensorssystemen, die den Füllstand der Tanks und den Fluss des Tankinhalts präzise, vorzugsweise in Echtzeit, bestimmen.

Herkömmliche Sensorssysteme sind teuer in der Produktion sowie aufwendig in der Installation und müssen für jede Tankart bzw. Tankform einzeln kalibriert werden, damit eine Verbindung zwischen Füllstandmesswert und dem Tankvolumen hergestellt werden kann. Insbesondere die heutzutage verwendeten Sensoren zur Füllstandmessung müssen für jede Tankart speziell hergestellt und/oder kalibriert werden. Die Kosten für eine Sensorisierung von Tanksystemen sind damit in Summe mit Kosten verbunden, die einen großflächigen Einsatz von Monitoringsystem unwirtschaftlich erscheinen lassen.

Zur Füllstandserfassung werden heutzutage eine Reihe von unterschiedlichen Sensorssystemen angewendet. Hierzu gehören vor allem Schwimmer, hydrostatische Sensoren, magnetische Füllstandsanzeigen, magnetostriktive Füllstandsender, sowie Füllstandsensoren, die entweder Lidar, Radar oder Ultraschall nutzen. Darüber hinaus findet die Bestimmung des spezifischen Gewichts zur Messung des Füllstands regelmäßig Anwendung. Die Wahl der Sensoren bzw. des Messverfahrens ist in der Regel bestimmt durch die Anforderungen an Genauigkeit und den Kosten des Sensorssystems. Einige Sensorssysteme sind auf bestimmte Arten von Tanks spezialisiert und nicht ohne weiteres auf andere Bauformen und Tankmaterialien übertragbar. Bei den zuvor genannten Beispielen ist das Signal abhängig von der Temperatur. Dadurch entsteht ein nicht unerheblicher Kalibrierungsaufwand.

Weiterhin sind im Stand der Technik kapazitive Sensorsysteme bekannt. Aufgrund des Fortschritts der kapazitativen Messtechnik und der damit einhergehenden technologischen Reife und niedrigen Komponentenkosten ist dieses Messprinzip prinzipiell gut geeignet, um den Füllstand in Tanksystemen zu erfassen. Das zu Grunde liegende physikalische Prinzip basiert auf der Bestimmung der Kapazität eines Kondensators, wobei die Dielektrizitätskonstante des Raumes zwischen den Elektroden des Kondensators je nach Medium, dass sich zwischen den Elektroden befindet, variiert und somit eine Änderung der Kapazität gemessen werden kann.

Dazu ist aus dem Stand der Technik ein langer, meist zylindrischer Stab mit einer Außen- und einer Innenwand bekannt, der in das Fluid eingetaucht wird. Das Fluid kann zwischen die Außenwand und die Innenwand gelangen, und es wird die Kapazität zwischen der Außenwand und der Innenwand gemessen. Um ausgehend von einer ermittelten Füllhöhe Rückschlüsse auf den Füllstand im Tank ziehen zu können, ist es vorab erforderlich, das Sensorsystem auf die individuelle Beschaffenheit und auf die Form des jeweiligen Tanks zu kalibrieren, damit die Füllhöhe mit einem Füllvolumen verknüpft werden kann. Ferner erlaubt ein zylindrischer Stab keinen flexiblen Einsatz bei unterschiedlichen Tankformen, da der zylindrische Stab in seiner Form nicht der Tankform angepasst werden kann.

Davon ausgehend ist es die Aufgabe der Erfindung, einen Füllstandssensor zur Messung des Füllstands eines Fluids in einem Tank bereitzustellen, der für beliebige Tankformen und Tankarten ohne großen Kalibrierungsaufwand flexibel eingesetzt werden kann.

Diese Aufgabe wird durch den Gegenstand des Patentanspruchs 1 gelöst. Bevorzugte Weiterbildungen finden sich in den Unteransprüchen.

Erfindungsgemäß ist somit ein Füllstandssensor zur Messung des Füllstands eines Fluids in einem Tank vorgesehen, der eine Füllstandssonde und eine Messschaltung aufweist, wobei die Füllstandssonde eine Mehrzahl von hintereinander angeordneten Paaren mikromechanischer Elektroden aufweist, die jeweils einen mikromechanischen Kondensator bilden, wobei die mikromechanischen Elektroden eines jeden mikromechanischen Kondensators jeweils in einem festen Abstand voneinander angeordnet sind und das Volumen zwischen den mikromechanischen Elektroden eines jeden mikromechanischen Kondensators bei der Verwendung der Füllstandssonde in einem Tank für ein in dem Tank befindliches Fluid frei zugänglich ist, und die Messschaltung derart ausgestaltet und mit den mikromechanischen Kondensatoren verbunden ist, dass die Kapazitäten der einzelnen mikromechanischen Kondensatoren messbar sind.

Ist vorliegend die Rede von "Mikromechanik", ist damit Herstellung und Anwendung von mechanischen Systemen mit Abmessungen im Mikrometerbereich gemeint.

"Fester Abstand" bedeutet vorliegend, dass der Abstand der Elektroden voneinander beim Einsatz der Füllstandssonde in einem Tank fest ist und sich nicht verändert.

Es ist somit ein maßgeblicher Punkt der Erfindung, dass die Füllstandssonde eine Mehrzahl aneinander gereihte diskrete Kondensatoren umfasst, deren Kapazitäten einzeln gemessen und ausgewertet werden können. Durch die Dimensionierung der Kondensatoren im Mikrometerbereich können die Kondensatoren in einem geringen Abstand voneinander installiert sein, so dass eine sehr hohe Messgenauigkeit erzielt werden kann. Jeder Kondensator ist ein separates Bauteil und aufgrund der weit verbreiteten Anwendung derartiger Mikrokondensatoren, können sie kostengünstig produziert und verbaut werden.

Zum Verständnis der Funktion können die Kondensatoren prinzipiell als Plattenkondensatoren betrachtet werden. Die Kapazität eines jeden Kondensators bestimmt sich durch $C = \varepsilon_0 \varepsilon_R \dfrac{A}{d}$. Dabei ist A die Fläche der Elektroden, d der Abstand der Elektroden, $\varepsilon_0$ die Dielektrizitätskonstante für Vakuum und $\varepsilon_R$ die Dielektrizitätskonstante für das jeweilige Dielektrikum bzw. Medium, das sich zischen den Elektroden befindet. Für die Erfindung kommt es im Übrigen nicht darauf an, wie die Elektroden im Raum relativ zueinander orientiert sind. Die Elektroden können also nebeneinander oder übereinander liegen oder auch beliebig anders im Raum orientiert sein.

Gemäß einer bevorzugten Weiterbildung der Erfindung sind die mikromechanischen Elektroden aller mikromechanischen Kondensatoren jeweils im selben Abstand d voneinander angeordnet. Dadurch haben alle Kondensatoren bei baugleichen Elektroden und bei dem gleichen Medium zwischen den Elektroden auch die gleiche Kapazität.

Abweichungen bezüglich der gemessenen Kapazität der Kondensatoren sind dementsprechend auf eine Veränderung des Mediums zurückzuführen. Dabei kann es sich sowohl um eine Änderung des Mediums an sich handeln, wie bei einem steigenden Fluidspiegel, bei dem sich in dem Volumen zwischen den Elektroden eines Kondensators schon Fluid befindet und bei dem nächst höher gelegenen Kondensator noch nicht, als auch um eine Änderung innerhalb des Fluids, wie bei Verschmutzungen.

Gemäß einer bevorzugten Weiterbildung der Erfindung sind die mikromechanischen Kondensatoren in äquidistanten Abständen zueinander angeordnet. Dies ermöglicht eine einheitliche Höhenskala. Jedem Kondensator kann eine eigene Höhe zugeordnet werden, wobei der Höhenunterschied zwischen den Kondensatoren gleich ist, da die Kondensatoren in gleichen Abständen zueinander angeordnet sind.

Gemäß einer bevorzugten Weiterbildung der Erfindung ist der Abstand zwischen zwei mikromechanischen Kondensatoren größer als 1 μm und kleiner als 300 μm. Gemäß einer weiteren bevorzugten Weiterbildung der Erfindung ist der Abstand zwischen den beiden mikromechanischen Elektroden eines jeweiligen mikromechanischen Kondensators größer als 1 μm und kleiner als 300 μm. Je geringer der der Abstand zwischen den Kondensatoren bzw. zwischen den Elektroden, desto höher ist die Messgenauigkeit. Bei Abständen im Mikrometerbereichen zwischen den Kondensatoren und/oder zwischen den Elektroden kann die Füllhöhe näherungsweise vollständig erfasst werden, da der Interpolationsfehler bei der Interpolation der Füllhöhe zwischen zwei Kondensatoren sich nahezu null annähert, je kleiner der Abstand gewählt ist.

Gemäß einer bevorzugten Weiterbildung der Erfindung ist die Füllstandssonde starr. Eine starre Füllstandssonde hat den Vorteil, dass sie auf Grund der Unbiegsamkeit besonders leicht in einen bereits mit Fluid gefüllten Tank eingetaucht werden kann.

Alternativ ist gemäß einer bevorzugten Weiterbildung der Erfindung vorgesehen, dass die Füllstandssonde ein flexibles Trägermaterial aufweist, an dem die mikromechanischen Kondensatoren befestigt sind. Bei dem flexiblen Trägermaterial kann es sich beispielsweise um ein Band oder eine Folie handeln, die an der inneren Tankwandung oder auf einem Pumpenschlauch befestigt werden kann. "Flexibel" bedeutet vorliegend "wenigstens biegsam". Das flexible Trägermaterial erlaubt es, das Sensorsystem in Tanks beliebiger Formen und Arten anordnen zu können. Vorzugsweise wird das Trägermaterial auf einem Pumpenschlauch angeordnet. Diese Anordnung hat den Vorteil, dass keine Extraöffnung für die Installation des Füllstandssensors notwendig ist

Gemäß einer bevorzugten Weiterbildung der Erfindung umfasst der Füllstandssensor ein Kommunikationsmodul, das mit der Messschaltung gekoppelt ist und drahtlos mit einer Computereinrichtung koppelbar ist. Das Kommunikationsmodul verfügt vorzugsweise über eine Internetanbindung, die eine Kontrolle des Füllstandssensors und/oder anderer Einrichtungen eines Tanks, an dem der Füllstandssensor verwendet wird, wie der Tankpumpe, ermöglicht. So kann insbesondere eine internetbasierte Nutzerauthentifizierung und Zugangskontrolle implementiert werden. Bei der Computereinrichtung handelt es sich vorzugsweise um ein Smartphone oder einen Tablet-Computer.

Gemäß einer bevorzugten Weiterbildung der Erfindung umfasst der Füllstandssensor ein Modul zur globalen Positionsbestimmung. Das GPS (engl. global positioning system)-Modul gewährleistet die Geolokalisierung des Füllstandssensors bzw. des Tanks, in dem die Füllstandssonde angeordnet ist. Auf diese Weise kann die Sicherheit erhöht und im Falle eines Diebstahls der Füllstandssensor bzw. die Füllstandssonde und der Tank lokalisiert werden.

Gemäß einer bevorzugten Weiterbildung der Erfindung umfasst der Füllstandssensor eine Leseeinheit zum Erfassen von Beacon-Funksignalen, z.B. für eine Zugangskontrolle und Nutzerauthentifizierung. Vorzugsweise handelt es sich dabei um eine BLE-Leseeinheit zum Erfassen von BLE-Beacon-Funksignalen, die von BLE-Beacons ausgesandt werden. Auf diese Weise können z.B. Fahrzeuge, die einen BLE-Beacon aufweisen, identifiziert werden, um sicherzustellen, dass nur berechtigte Nutzer und berechtigte Fahrzeuge eine mit dem Füllstandssensor ausgestattete mobile Tankanlage nutzen können. Anstatt BLE sind freilich auch andere Funkprotokolle möglich, wie LoRa, GSM, 5G oder WiFi.

Erfindungsgemäß ist die Verwendung eines oben beschriebenen Füllstandssensors zur Impedanzspektroskopie eines in einem Tank enthaltenen Fluids zur Bestimmung wenigstens einer Eigenschaft des Fluids vorgesehen. Über die Veränderung der Kapazität eines einzelnen Kondensators können Rückschlüsse auf das Medium zwischen den Elektroden gezogen werden. Dazu wird die Dielektrizitätskonstante für das jeweilige Dielektrikum bzw. Medium bestimmt. Ist der Kondensator von Fluid umgebene, kann die Art und/oder die Qualität des Fluids anhand der bestimmten Dielektrizitätskonstante ermittelt werden. Beispielsweise ist die Dielektrizitätskonstante für Diesel $\varepsilon_R$ = 2,1 As/Vm und $\varepsilon_R$ = 2,0 As/Vm für Benzin. Kleinste Abweichungen können ein Anzeichen für Verschmutzungen und somit für Qualitätsdefizite sein.

Erfindungsgemäß ist weiterhin ein Tank mit einem oben beschriebenen Füllstandssensor vorgesehen, wobei der Tank zusätzlich mit einer Zuflussmesseinrichtung zum Messen des Zuflusses von Fluid in den Tank und mit einer Abflussmesseinrichtung zum Messen des Abflusses von Fluid aus dem Tank ausgestattet ist und ein Füllstandsbestimmungsmodul aufweist, das derart mit der Messschaltung, der Zuflussmesseinrichtung und der Abflussmesseinrichtung verbunden ist, dass dem Füllstandsbestimmungsmodul die gemessenen Kapazitäten der einzelnen mikromechanischen Kondensatoren, der gemessene Zufluss von Fluid in den Tank und der gemessene Abfluss von Fluid aus dem Tank zuführbar ist, so dass mittels des Füllstandsbestimmungsmodul der Füllstand in dem Tank bestimmbar ist.

Mittels des gemessenen Zulaufs bzw. Ablaufs des Fluids können in Abhängigkeit der Füllhöhenänderung Rückschlüsse auf das Tankvolumen gezogen werden. Darüber kann der Füllstand des Fluids in Abhängigkeit des Tankvolumens ermittelt werden, ohne dass die Tankform oder Tankart vorab mit dem Füllstandssensor kalibriert werden muss. Bei dem gemessenen Zulauf bzw. Ablauf handelt es sich um einen Volumenstrom pro Zeit. Davon ausgehend kann das Volumen eine Tankabschnitts bestimmt werden.

Weiterhin ist die Verwendung des Tanks zur Detektion einer Leckage in dem Tank vorgesehen. Dazu kann die Füllhöhe in mehrere Abschnitte unterteilt werden. Die Werte von Füllstandsmessung und Flussmessung können kombiniert werden, sodass daraus die Querschnittsfläche jeder der Abschnitte berechnet werden kann. Basierend auf diesen Informationen kann ein intelligenter Füllstandssensor Verformungen der Tankform, beispielsweise durch Unfälle, sowie Leckagen selbstständig erkennen. So kann z.B. mit einer Zeitreihenanalyse die Änderungen der Form automatisch detektiert werden. In ähnlicher Weise sind Leckagen durch ein ungewöhnliches Tankverhalten automatisch detektierbar, z.B. durch unplausible Zusammenhänge zwischen Flusswerten und Füllstandänderung. Wenn diese Zusammenhänge für die bisher angenommen Form nicht mehr plausibel sind, kann es nämlich nur so sein, dass sich die Form des Tanks geändert hat und/oder dass eine Leckage vorliegt.

Erfindungsgemäß ist weiterhin ein Verfahren zum Klassifizieren des Tanks mit folgenden Verfahrensschritten vorgesehen:

S1) Bestimmen eines Fluidspiegels mittels des Füllstandsensors, wobei für jeden Kondensator die Kapazität gemessen und anhand der Kapazität bestimmt wird, ob das Volumen zwischen den mikromechanischen Elektroden mit Fluid gefüllt ist,
S2) Bestimmen der aktuellen Füllhöhe des Fluids im Tank abhängig vom Fluidspiegel,
S3) Zuführen des Fluids in den Tank oder Abführen des Fluids aus dem Tank,
S4) Messen des Zuflusses des Fluids mittels Zuflussmesseinrichtung bzw. Messen des Abflusses des Fluids mittels Abflussmesseinrichtung,
S5) erneutes Bestimmen des Fluidspiegels und der aktuellen Füllhöhe des Fluids,
S6) Bestimmen einer mittleren Querschnittsfläche des Tanks für einen Tankabschnitt zwischen der aktuellen und vorherigen Füllhöhe in Abhängigkeit des Zuflusses bzw. des Abflusses und der Differenz der jeweiligen Füllhöhen.

Vorliegend wird unter Fluidspiegel die Oberfläche des Fluids verstanden. In Verknüpfung mit dem Tank bzw. mit einer durch die Kondensatoren definierte Höhenskala ergibt sich aus dem Fluidspiegel die Füllhöhe des Fluids in dem Tank. Wird die Füllhöhe mit dem Volumen des Tanks verknüpft, ist vorliegend die Rede vom Füllstand. Der Füllstand kann beispielsweise angeben, ob der Tank zur Hälfte oder nur zu einem Drittel gefüllt ist. Dazu muss sowohl das gesamte Tankvolumen als auch das Volumen des Fluids bekannt sein.

Um den Fluidspiegel bzw. die Lage des Fluidspiegels zu bestimmen, wird für jeden Kondensator die Kapazität gemessen und die Dielektrizitätskonstante bestimmt. Auf diese Weise wird ermittelt, ob es sich bei dem Medium zwischen den Elektroden um Luft oder um das Fluid handelt. Das Medium ist Luft, wenn die Dielektrizitätskonstante $\varepsilon_R$ gleich eins ist, und Fluid, wenn die Dielektrizitätskonstante $\varepsilon_R$ ungleich eins ist.

Die Dielektrizitätskonstante $\varepsilon_R$ ergibt sich bei gemessener Kapazität C aus

$$\varepsilon_R = \frac{Cd}{\varepsilon_0 A}.$$

Ein Kondensator mit einer Dielektrizitätskonstante $\varepsilon_R$ im Wesentlichen gleich eins zeigt an, dass auf der Höhe des jeweiligen Kondensators Luft ist. Ein Kondensator mit einer die Dielektrizitätskonstante $\varepsilon_R$ ungleich eins zeigt an, dass auf der Höhe des jeweiligen Kondensators Fluid ist. Auf diese Weise kann der Fluidspiegel bzw. in Kombination mit einer Höhenskala die Fluidhöhe bestimmt werden. Wird nun der Fluidspiegel durch Zuführen oder Abführen des Fluids erhöht bzw. abgesenkt, ändert sich die Füllhöhe des Fluids. Wird gleichzeitig der Zufluss bzw. Abfluss gemessen und mit der Füllhöhenänderung verknüpft, kann daraus die für diesen Abschnitt mittlere Querschnittsfläche bestimmt werden.

Gemäß einer bevorzugten Weiterbildung der Erfindung umfasst das Verfahren folgende weitere Verfahrensschritte:

S7) Wiederholen der Schritte S1) bis S6), wobei der Fluidspiegel schrittweise erhöht oder vermindert wird, sodass der Tank abschnittsweise abgetastet wird, und
S8) Zusammenfügen der Querschnittsflächen zum Erhalten eines dreidimensionalen Abbilds der Tankform und des Tankvolumens.

Werden die Schritte wiederholt und wird die Füllhöhenänderung und somit die Höhe des Abschnitts dabei hinreichend klein gewählt, kann durch Kombinieren der einzelnen Querschnittsflächen ein Abbild des Tanks erstellt und das Tankvolumen präzise bestimmt werden.

Auf diese Weise erfolgt vorzugsweise bei der Erstbefüllung des Tanks bereits während der Befüllung die Erstkalibrierung. Während das Fluid dem Tank zugeführt wird, wird die Füllhöhenänderung über die Kondensatoren und der Volumenstrom über die Zuflussmesseinrichtung erfasst, sodass für jeden Abschnitt zwischen zwei Kondensatoren eine Querschnittsfläche bestimmt und daraus die Tankform und das Tankvolumen ermittelt werden kann.

Gemäß einer bevorzugten Weiterbildung der Erfindung umfasst das Verfahren folgenden weiteren Verfahrensschritt:
S9) Bestimmen des Füllstands des Fluids in dem Tank in Abhängigkeit von der Füllhöhe und des Tankvolumens.

Ist das Tankvolumen bekannt, kann ausgehend von der Füllhöhe der Füllstand bzw. wie viel Volumen an Fluid im Tank verbleibt ermittelt werden.

Nachfolgend wird die Erfindung anhand eines bevorzugten Ausführungsbeispiels unter Bezugnahme auf die Zeichnungen weiter im Detail erläutert.

In den Zeichnungen zeigen

Fig. 1 schematisch einen Tank mit einem Füllstandssensor in einer Schnittansicht gemäß einem bevorzugten Ausführungsbeispiel der Erfindung,

Fig. 2 schematisch den Tank mit einem Füllstandssensor aus Fig. 1 in einer vereinfachten Darstellung gemäß einem bevorzugten Ausführungsbeispiel der Erfindung,

Fig. 3 schematisch ein Abbild eines Tanks in einer Schnittansicht gemäß einem bevorzugten Ausführungsbeispiel der Erfindung,

Fig. 4 schematisch ein Flussdiagramm mit dem Ablauf eines Verfahrens zum Bestimmen des Füllstandes gemäß einem bevorzugten Ausführungsbeispiel der Erfindung und

Fig. 5 a und b schematisch ein Flussdiagramm mit dem Ablauf eines Verfahrens zum Klassifizieren eines Tanks gemäß einem bevorzugten Ausführungsbeispiel der Erfindung.

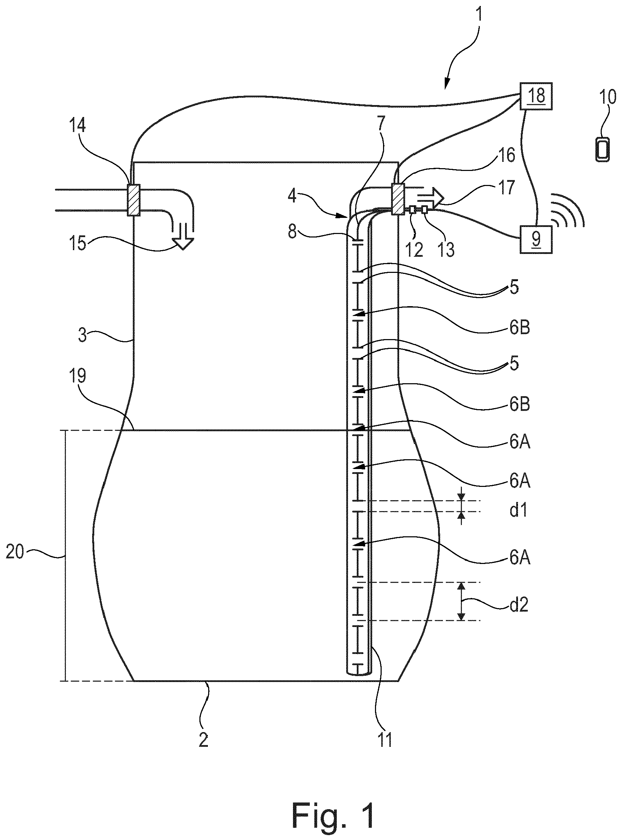

Aus Fig. 1 ist schematisch ein mit Fluid 2 gefüllter Tank 3 mit einem Füllstandssensor 1 ersichtlich. Der Füllstandssensor 1 umfasst eine Füllstandssonde 4, die in dem Tank 3 angeordnet und in dem Fluid 2 eingetaucht ist. Die Füllstandssonde 4 umfasst ein flexibles Trägermaterial 8, das auf einer Pumpe 11 befestigt ist. Entlang der Füllstandssonde sind mehrere Elektroden 5 paarweise angeordnet, die jeweils einen Kondensator 6 bilden. Die Kondensatoren 6 sind entlang der Füllstandssonde 4 übereinander angeordnet. Die Abstände d1 der Elektroden 5 voneinander sind für alle Kondensatoren 6 gleich und liegen im Mikrometerbereich. Auch die Abstände d2 der Kondensatoren 6 voneinander sind alle gleich und liegen ebenfalls im Mikrometerbereich. Zur vereinfachten Anschauung wurde hier auf eine maßstabsgetreue Darstellung verzichtet. Im Übrigen ist hier gezeigt, dass die Elektroden 5 eines jeden Kondensators übereinander liegen. Grundsätzlich wäre aber auch eine andere Orientierung der Elektroden 5 zueinander möglich. So könnte die Elektroden auch nebeneinander liegen, also auf der selben Höhe längs der Füllstandssonde 4.

Über einen Zulauf und einen Ablauf kann das Fluid 2 dem Tank 3 zugeführt oder abgeführt werden. Der Zufluss 15 wird mittels einer Zuflussmesseinrichtung 14 gemessen. Der Abfluss 17 wird mittels einer Abflusseinrichtung 16 gemessen. Die Zuflussmesseinrichtung 14 und die Abflusseinrichtung 16 können grundsätzlich auch als eine gemeinsame Messeinrichtung ausgestaltet sein, insbesondere wenn der Zulauf und der Ablauf integral ausgestaltet sind.

Die Zuflussmesseinrichtung 14 und die Abflusseinrichtung 16 sind mit einem Füllstandsbestimmungsmodul 18 verbunden. Die Messschaltung 17 des Füllstandssensors 1 ist über ein Kommunikationsmodul 9 mit dem Füllstandsbestimmungsmodul 18 verbunden, über das das Füllstandsbestimmungsmodul 18 die Messwerte aus den Kapazitätsmessungen erhält. Auch die Daten aus einem GPS-Modul 12 und einer BLE-Leseeinheit 13 werden über das Kommunikationsmodul 9 gesteuert. Das Kommunikationsmodul 9 wird drahtlos über eine Computereinrichtung 10, wie einem Smartphone, gesteuert.

Der Fluidspiegel 19 des Fluids 2 wird mittels der Kondensatoren 6 bestimmt. Die Kapazität der Kondensatoren 6 wird gemessen und daraufhin die Dielektrizitätskonstante bestimmt. Kondensatoren 6A, die von Fluid 2 umgeben sind, lassen sich über eine Dielektrizitätskonstante ungleich null bestimmen. Kondensatoren 6B, die von Luft umgeben sind, lassen sich über eine Dielektrizitätskonstante gleich null bestimmen. Somit kann der Fluidspiegel 19 zwischen einem Kondensator 6A umgeben von Fluid 2 und einen darauffolgenden Kondensator 6B umgeben von Luft eingegrenzt werden. In Kombination mit einer Höhenskala, die über die Abstände d2 der Kondensatoren 6 definiert wird, kann die Fluidhöhe 20 bestimmt werden.

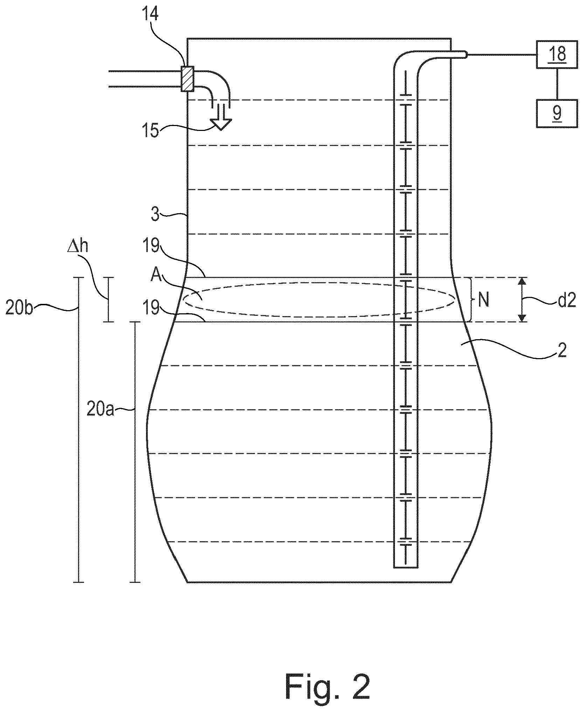

Fig. 2 zeigt eine vereinfachte Darstellung des Tanks aus Fig. 1. Es ist gezeigt, dass die Tankhöhe in mehrere Segmente N eingeteilt wird. Je ein Segment wird von zwei aufeinanderfolgenden Kondensatoren 6 definiert, sodass sich die Länge des Segments N aus dem Abstand der Kondensatoren d2 ergibt. Dadurch, dass die Abstände d2 der Kondensatoren im Mikrometerbereich liegen, kann das Segment N als zweidimensionale Schicht angenähert werden. Wird dem Tank 3 Fluid 2 hinzugeführt, erhöht sich der Fluidspiegel und somit die Füllhöhe. Die Füllhöhenänderung Δh ergibt sich aus der Differenz der vorherigen Füllhöhe 20a und der aktuellen Füllhöhe 20b. Über den mittels der Zuflussmesseinrichtung 14 gemessenen Zufluss 15 bzw. Volumenstroms und der Füllhöhenänderung Δh kann eine Querschnittsfläche A in dem Segment N bestimmt werden.

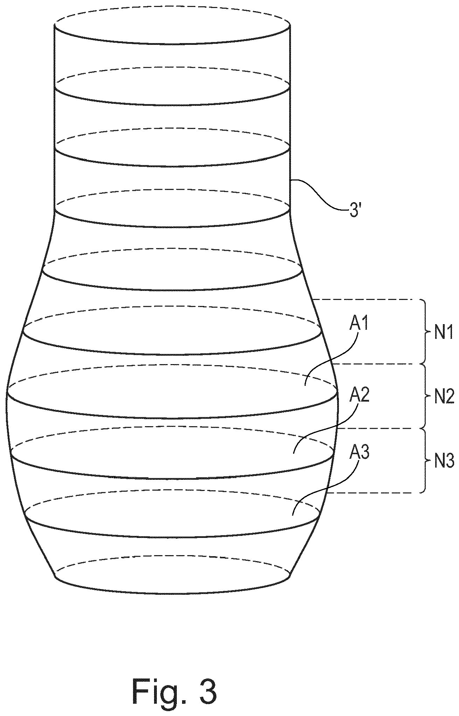

Fig. 3 zeigt ein Abbild 3' eines Tanks 3, bei dem für jedes einzelne Segment N1, N2, N3 eine Querschnittsfläche A1, A2, A3 bestimmt wurde. Werden die Querschnittsflächen A1, A2, A3 kombiniert, ergibt sich daraus ein dreidimensionales Abbild 3' des Tanks 3. Auch in dieser Darstellung ist die Länge der Segmente N1, N2, N3 nicht maßstabsgetreu. Die Segmente weisen eine Länge im Mikrometerbereich auf, sodass die hier angedeutete Interpolation zwischen den Querschnittsflächen A1, A2, A3 bzw. die Interpolationsfehler deutlich reduziert sind.

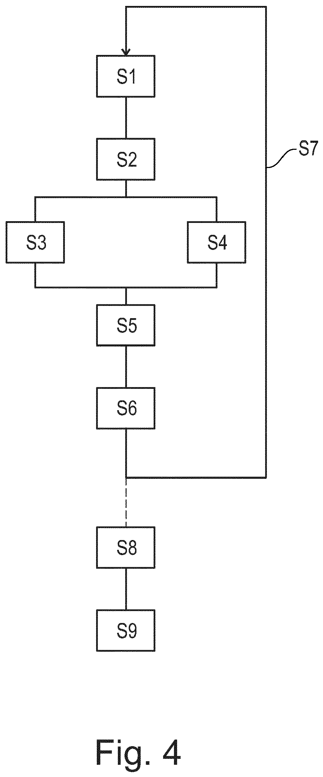

Fig. 4 zeigt schematisch ein Verfahren zum Bestimmen des Füllstandes. Zuerst wird der Fluidspiegel 19 mittels der Kapazitätsmessung an den Kondensatoren 6 bestimmt (S1) und daraus eine Füllhöhe 20 ermittelt (S2). Danach wird Fluid 2 zugeführt oder abgeführt (S3) und gleichzeitig der Zufluss 15 bzw. Abfluss 17 gemessen (S4). Danach wird der Fluidspiegel 19 und die Füllhöhe 20 erneut bestimmt (S5) und anhand der Füllhöhenänderung Δh und des Zuflusses 15 bzw. Abflusses 17 eine Querschnittsfläche A bestimmt (S6). Die genannten Schritte werden wiederholt (S7) und der Tank weiter gefüllt bzw. entleert, sodass für jedes Segment N eine Querschnittsfläche A bestimmt werden kann. Anschließend werden die Querschnittsflächen A zusammengefasst und ein Abbild 3' des Tanks 3 generiert (S8). Dem Abbild 3' ist die Tankform und das Tankvolumen entnehmbar. Die Erstkalibrierung ist an diesem Punkt abgeschlossen. In Kombination mit der Füllhöhe kann nun der Füllstand des Fluids 2 bestimmt (S9) und überwacht werden.

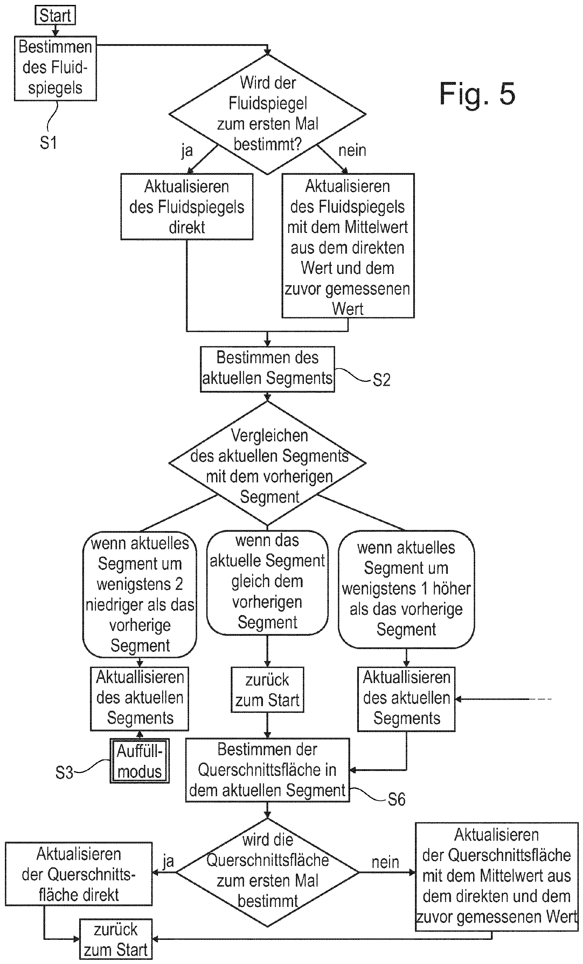

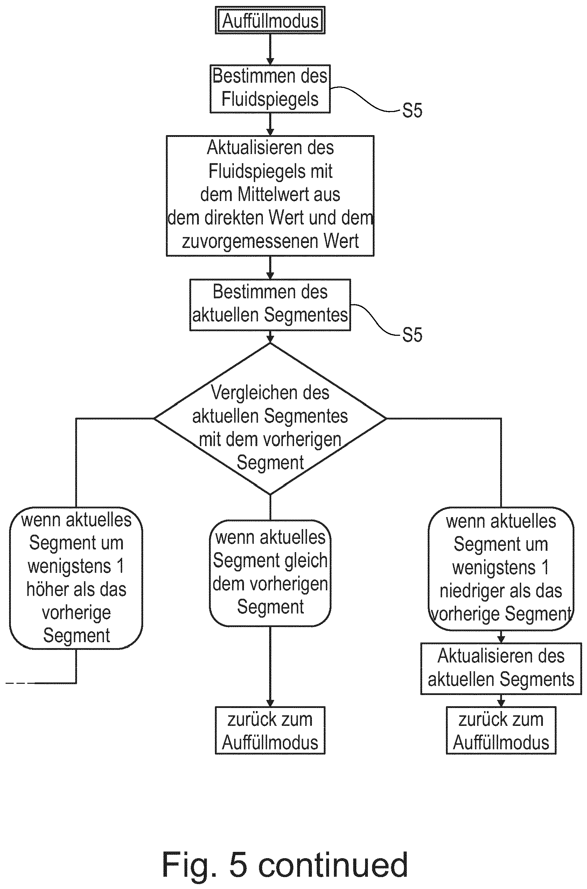

Fig. 5 a und b zeigen schematisch eine Abwandlung des Verfahrens zum Klassifizieren eines Tanks und Steuern des Füllstands. Der Übersichtlichkeit halber ist der Auffüllmodus separat in Fig. 5b dargestellt. Der Schritt in Fig. 5b mit der Bezeichnung "wenn aktuelles Segment um wenigstens 1 höher als das vorherige Segment" führt mittels der gestrichelt dargestellten Linie zu dem Schritt in Fig. 5a, der dort mit "Aktualisieren des aktuellen Segments" bezeichnet ist.

Ähnlich wie bereits zu Fig. 4 beschrieben, wird in einem ersten Schritt der Fluidspiegel 19 bestimmt (S1). Der Unterschied zum Verfahren aus Fig. 4 ist, dass zwischen einer Erstmessung und einer wiederholten Messung unterschieden wird. Bei der Erstmessung wird der direkte Wert für den Fluidspiegel 19 abgespeichert. "Direkt" meint, dass der zuletzt gemessene Wert abgespeichert wird. Handelt es sich um eine wiederholte Messung, beispielsweise weil die Erstkalibrierung bereits erfolgte und die Schritte nur zur Überwachung sukzessive wiederholt werden, wird ein gleitender Mittelwert zwischen dem aktuellen Messwert und dem zuvor gemessenen Messwert gebildet und als neuer Fluidspiegel 19 abgespeichert.

Danach wird ausgehend von der Füllhöhe 20 das aktuelle Segment bestimmt (S2). Die Tankhöhe ist in Segmente N unterteilt und die Segmente N sind durchnummeriert, wobei die Zahl des Segments größer wird, je näher es sich am Tankboden befindet. Das aktuelle Segment N ist das Segment, das die Füllhöhe 20 angibt. Wenn das aktuelle Segment N gleich dem vorherigen Segment N0 ist oder das aktuelle Segment N zum ersten Mal gemessen wurde, wird wieder mit dem ersten Schritt gestartet.

Wenn das aktuelle Segment N bei zwei aufeinanderfolgenden Messungen um wenigstens zwei tiefer liegt als das vorherige Segment N0, also N= N0+2 gilt, wird der Wert für das Segment N aktualisiert und mit dem Auffüllmodus gestartet (S3). Der Grund für die Verwendung von N= N0+2 ist die Einführung einer Hysterese, damit eine verrauschte Messung das System nicht fälschlicherweise in den Auffüllmodus versetzt.

Wenn das aktuelle Segment N bei zwei aufeinanderfolgenden Messungen um wenigstens eins höher liegt als das vorherige Segment N0, also N= N0-1 gilt, wird der Wert für das Segment N aktualisiert und die Querschnittsfläche A des Segments N bestimmt (S6). Für den Fall, dass die Querschnittsfläche A wiederholt bestimmt wird, wird als neuer Wert für die Querschnittsfläche A der gleitende Mittelwert aus zuvor bestimmter und aktuell bestimmter Querschnittsfläche abgespeichert. Für den Fall, dass die Querschnittsfläche A zum ersten Mal bestimmt wird, wird dieser direkte Wert abgespeichert. Danach wird wieder mit dem ersten Schritt gestartet.

Der in Fig. 5b dargestellte Auffüllmodus zeichnet sich dadurch aus, dass nach einem ersten Auffüllen der Fluidspiegel 19 erneut bestimmt wird (S5) und der gleitende Mittelwert aus zuvor bestimmten Fluidspiegel 19 und aktuell bestimmten Fluidspiegel 19 als neuer Fluidspiegel abgespeichert wird. Danach wird auch die Füllhöhe bzw. das aktuelle Segment N neu bestimmt (S5) und mit dem zuvor bestimmten Segment N0 verglichen. Erst wenn das neu bestimmte Segment N um eins höher ist als das zuvor bestimmte Segment N0, also N= N0-1 gilt, wird das neu bestimmte Segment N abgespeichert und die Querschnittsfläche A für dieses neue Segment N bestimmt. Anderenfalls wird erneut mit dem Auffüllmodus begonnen, Fluid 2 zugeführt und erneut der Fluidspiegel 19 und das Segment bestimmt (S5).

Das Fluid 2 wird also so lange zugeführt, bis das neu bestimmte Segment N um wenigstens eins höher ist als das zuvor bestimmte Segment N0, sodass insgesamt eine Kalibrierung des Füllstandssensors in Abhängigkeit der Tankform beim schrittweisen Erhöhen des Fluidspiegels 19 bzw. Befüllen des Tanks 3 erfolgt.

Dadurch, dass die Messung immer dann wiederholt wird, wenn sich das Segment, in dem der Fluidspiegel 19 liegt und somit die Füllhöhe 20 beschreibt, in zwei aufeinander folgenden Messungen gleichbleibt, erfolgt dadurch eine permanente Überwachung des Füllstands.

Insgesamt werden die Messungen des Fluidspiegels, des Segmentes, das die Füllhöhe angibt, und die Querschnittsflächen A der Segmente N sukzessive wiederholt. Bei der Wiederholung der Schritte werden die jeweiligen Werte bei Änderungen aktualisiert. Dabei ergeben sich die aktualisierten Werte aus dem gleitenden Mittelwert aus dem vorherigen und dem jeweilig gemessenen neuen Wert. Auf diese Weise können Messfehler vermindert werden.

Die dieser Patentanmeldung zu Grunde liegende Erfindung entstand in einem Projekt, welches unter dem Förderkennzeichen D-11-43144-001-081093 mit dem Titel SANTO von der Europäischen Union gefördert wurde.

Bezugszeichenliste

| | |
|---|---|
| 1 | Füllstandssensor |
| 2 | Fluid |
| 3 | Tank |
| 3' | Abbild des Tanks |
| 4 | Füllstandssonde |
| 5 | Elektrode |
| 6 | Kondensator |
| 6A | Kondensator umgeben von Fluid mit $\varepsilon_R \neq 1$ |
| 6B | Kondensator umgeben von Luft mit $\varepsilon_R = 1$ |
| 7 | Messschaltung |
| 8 | Trägermaterial |
| 9 | Kommunikationsmodul |
| 10 | Computereinrichtung |
| 11 | Pumpe |
| 12 | GPS Modul |
| 13 | BLE Leseeinheit |
| 14 | Zuflussmesseinrichtung |
| 15 | Zufluss |
| 16 | Abflussmesseinrichtung |
| 17 | Abfluss |
| 18 | Füllstandsbestimmungsmodul |
| 19 | Fluidspiegel |
| 20 | Füllhöhe |
| 20a | vorherige Füllhöhe |
| 20b | aktuelle Füllhöhe |
| A, A1, A2, A3 | Querschnittsfläche |
| d1 | Abstand der Elektroden |
| d2 | Abstand der Kondensatoren |
| Δh | Füllhöhenänderung |
| N, N1, N2, N3 | Segment |
| S1 | Bestimmen eines Fluidspiegels |
| S2 | Bestimmen der aktuellen Füllhöhe bzw. des aktuellen Segments |
| S3 | Zuführen oder Abführen des Fluids |
| S4 | Messen des Zuflusses oder des Abflusses des Fluids |
| S5 | erneutes Bestimmen des Fluidspiegels und der aktuellen Füllhöhe bzw. des aktuellen Segments |
| S6 | Bestimmen einer mittleren Querschnittsfläche |
| S7 | Wiederholen der Schritte S1) bis S6) |
| S8 | Zusammenfügen der Querschnittsflächen zum Erhalten eines dreidimensionalen Abbilds des Tanks |
| S9 | Bestimmen des Füllstands des Fluids |

**Patentansprüche**

1. Füllstandssensor (1) zur Messung des Füllstands eines Fluids (2) in einem Tank (3), mit einer Füllstandssonde (4) und einer Messschaltung (7), wobei

die Füllstandssonde (4) eine Mehrzahl von hintereinander angeordneten Paaren mikromechanischer Elektroden (5) aufweist, die jeweils einen mikromechanischen Kondensator (6) bilden, wobei die mikromechanischen Elektroden (5) eines jeden mikromechanischen Kondensators (6) jeweils in einem festen Abstand (d1) voneinander angeordnet sind und das Volumen zwischen den mikromechanischen Elektroden (5) eines jeden mikromechanischen Kondensators (6) bei der Verwendung der Füllstandssonde (4) in einem Tank (3) für ein in dem Tank (3) befindliches Fluid (2) frei zugänglich ist, und

die Messschaltung (7) derart ausgestaltet und mit den mikromechanischen Kondensatoren (6) verbunden ist, dass die Kapazitäten der einzelnen mikromechanischen Kondensatoren (6) messbar sind.

2. Füllstandssensor (1) gemäß Anspruch 1, wobei die mikromechanischen Elektroden (5) aller mikromechanischen Kondensatoren (6) jeweils im selben Abstand (d1) voneinander angeordnet sind.

3. Füllstandssensor (1) gemäß Anspruch 1 oder 2, wobei die mikromechanischen Kondensatoren (6) in äquidistanten Abständen (d2) zueinander angeordnet sind.

4. Füllstandssensor (1) gemäß einem der vorherigen Ansprüche, wobei der Abstand (d2) zwischen zwei mikromechanischen Kondensatoren (6) größer als 1 $\mu$m und kleiner als 300 $\mu$m ist.

5. Füllstandssensor (1) gemäß einem der vorherigen Ansprüche, wobei der Abstand (d1) zwischen den beiden mikromechanischen Elektroden (5) eines jeweiligen mikromechanischen Kondensators (6) größer als 1 $\mu$m und kleiner als 300 $\mu$m ist.

6. Füllstandssensor (1) gemäß einem der vorherigen Ansprüche, wobei die Füllstandssonde (4) starr ist.

7. Füllstandssensor (1) gemäß einem der Ansprüche 1 bis 5, wobei die Füllstandssonde (4) ein flexibles Trägermaterial (8) aufweist, an dem die mikromechanischen Kondensatoren (6) befestigt sind.

8. Füllstandssensor (1) gemäß einem der vorherigen Ansprüche, wobei der Füllstandssensor (1) ein Kommunikationsmodul (9) umfasst, das mit der Messschaltung gekoppelt ist und drahtlos mit einer Computereinrichtung (10) koppelbar ist.

9. Füllstandssensor (1) gemäß einem der vorherigen Ansprüche, wobei der Füllstandssensor (1) ein Modul zur globalen Positionsbestimmung (12) umfasst.

10. Füllstandssensor gemäß einem der vorherigen Ansprüche, wobei der Füllstandssensor eine Leseeinheit (13) zum Erfassen von Beacon-Signalen umfasst.

11. Verwendung eines Füllstandssensors (1) gemäß einem der Ansprüche 1 bis 10 zur Impedanzspektroskopie eines in einem Tank (3) enthaltenen Fluids (2) zur Bestimmung wenigstens einer Eigenschaft des Fluids (2).

12. Tank (3) mit einem Füllstandssensor (1) gemäß einem der Ansprüche 1 bis 10, wobei

der Tank (2) zusätzlich mit einer Zuflussmesseinrichtung (14) zum Messen des Zuflusses (15) von Fluid (2) in den Tank (3) und mit einer Abflussmesseinrichtung (16) zum Messen des Abflusses (17) von Fluid (2) aus dem Tank (3) ausgestattet ist und

ein Füllstandsbestimmungsmodul (18) aufweist, das derart mit der Messschaltung (7), der Zuflussmesseinrichtung (14) und der Abflussmesseinrichtung (16) verbunden ist, dass dem Füllstandsbestimmungsmodul (18) die gemessenen Kapazitäten der einzelnen mikromechanischen Kondensatoren (6), der gemessene Zufluss (15) von Fluid (2) in den Tank (3) und der gemessene Abfluss (17) von Fluid (2) aus dem Tank (3) zuführbar ist, so dass mittels des Füllstandsbestimmungsmodul (18) der Füllstand in dem Tank (3) bestimmbar ist.

13. Verwendung eines Tanks (3) gemäß Anspruch 12 zur Detektion einer Leckage in dem Tank (3) mittels des Füllstandssensors (1), der Zuflussmesseinrichtung (14) und der Zuflussmesseinrichtung (14).

14. Verfahren zum Klassifizieren eines Tanks (3) nach Anspruch 12, mit folgenden Verfahrensschritten:

S1) Bestimmen eines Fluidspiegels (19) mittels des Füllstandsensors (1), wobei für jeden Kondensator (6) die Kapazität gemessen und anhand der Kapazität bestimmt wird, ob das Volumen zwischen den mikromechanischen Elektroden (5) mit Fluid (2) gefüllt ist,
S2) Bestimmen der aktuellen Füllhöhe (20a) des Fluids (2) im Tank (3) abhängig vom Fluidspiegel (19),
S3) Zuführen des Fluids (2) in den Tank (3) oder Abführen des Fluids (2) aus dem Tank (3),
S4) Messen des Zuflusses (15) des Fluids (2) mittels Zuflussmesseinrichtung (14) bzw. Messen des Abflusses (17) des Fluids (2) mittels Abflussmesseinrichtung (16), S5) erneutes Bestimmen des Fluidspiegels (19) und der aktuellen Füllhöhe (20b) des Fluids (2),
S6) Bestimmen einer mittleren Querschnittsfläche (A) des Tanks (3) für einen Tankabschnitt (N) zwischen der aktuellen (20a) Füllhöhe und der vorherigen Füllhöhe (20b) in Abhängigkeit des Zuflusses (15) bzw. des Abflusses (17) und der Differenz der jeweiligen Füllhöhen ($\Delta$h).

15. Verfahren nach Anspruch 14 mit folgenden weiteren Verfahrensschritten:

S7) Wiederholen der Schritte S1) bis S6), wobei der Fluidspiegel (20) schrittweise erhöht oder vermindert wird, sodass der Tank (3) abschnittsweise abgetastet wird, und

S8) Zusammenfügen der Querschnittsflächen (A) zum Erhalten eines dreidimensionalen Abbilds (3') der Tankform und des Tankvolumens.

Fig. 1

Fig. 2

Fig. 3

Fig. 4

Fig. 5

Start

Bestimmen des Fluid-spiegels — S1

Wird der Fluidspiegel zum ersten Mal bestimmt?

ja

nein

Aktualisieren des Fluidspiegels direkt

Aktualisieren des Fluidspiegels mit dem Mittelwert aus dem direkten Wert und dem zuvor gemessenen Wert

Bestimmen des aktuellen Segments — S2

Vergleichen des aktuellen Segments mit dem vorherigen Segment

wenn aktuelles Segment um wenigstens 2 niedriger als das vorherige Segment

wenn das aktuelle Segment gleich dem vorherigen Segment

wenn aktuelles Segment um wenigstens 1 höher als das vorherige Segment

Aktuallisieren des aktuellen Segments

zurück zum Start

Aktuallisieren des aktuellen Segments

Auffüll-modus — S3

Bestimmen der Querschnittsfläche in dem aktuellen Segment — S6

Aktualisieren der Querschnitts-fläche direkt

ja

wird die Querschnittsfläche zum ersten Mal bestimmt

nein

Aktualisieren der Querschnittsfläche mit dem Mittelwert aus dem direkten und dem zuvor gemessenen Wert

zurück zum Start

```
┌─────────────┐
│ Auffüllmodus│
└─────────────┘
       │
       ▼
┌─────────────┐
│Bestimmen des│         S5
│ Fluidspiegels│────────╮
└─────────────┘
       │
       ▼
┌──────────────────────┐
│   Aktualisieren des  │
│    Fluidspiegels mit │
│    dem Mittelwert aus│
│ dem direkten Wert und dem│
│   zuvorgemessenen Wert│
└──────────────────────┘
       │
       ▼
┌──────────────────┐
│   Bestimmen des  │      S5
│ aktuellen Segmentes│────╮
└──────────────────┘
       │
       ▼
      ╱ ╲
     ╱   ╲
    ╱Vergleichen des╲
   ╱ aktuellen Segmentes ╲
   ╲ mit dem vorherigen  ╱
    ╲   Segment  ╱
     ╲         ╱
      ╲       ╱
```

```
┌──────────────┐   ┌──────────────┐   ┌──────────────┐
│wenn aktuelles│   │wenn aktuelles│   │wenn aktuelles│
│ Segment um   │   │Segment gleich│   │ Segment um   │
│ wenigstens 1 │   │dem vorherigen│   │ wenigstens 1 │
│ höher als das│   │   Segment    │   │niedriger als das│
│  vorherige   │   └──────────────┘   │vorherige Segment│
│   Segment    │          │          └──────────────┘
└──────────────┘          │                 │
                          ▼                 ▼
                   ┌──────────────┐   ┌──────────────┐
                   │  zurück zum  │   │Aktualisieren des│
                   │  Auffüllmodus│   │aktuellen Segments│
                   └──────────────┘   └──────────────┘
                                            │
                                            ▼
                                     ┌──────────────┐
                                     │  zurück zum  │
                                     │  Auffüllmodus│
                                     └──────────────┘
```

# Fig. 5 continued

EUROPÄISCHER RECHERCHENBERICHT

Europäisches Patentamt
European Patent Office
Office européen des brevets

Nummer der Anmeldung

EP 23 15 1522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2020/209016 A1 (SPENCER MARK [US] ET AL) 2. Juli 2020 (2020-07-02) | 1-8 | INV. G01F23/263 G01F23/80 |
| A | * Absätze [0031], [0036] – [0037], [0018], [0045], [0046]; Abbildungen 2,4 * | 9-15 | |
| Y | US 2019/120678 A1 (CUMBIE MICHAEL W [US] ET AL) 25. April 2019 (2019-04-25) | 1-8 | |
| A | * Absatz [0031] * | 9-15 | |
| Y | WO 2021/241628 A1 (NGK INSULATORS LTD [JP]) 2. Dezember 2021 (2021-12-02) | 1-8 | |
| A | * Absätze [0030], [0037] * | 9-15 | |
| Y | US 2005/229699 A1 (CHAI JOHN Y [HK] ET AL) 20. Oktober 2005 (2005-10-20) | 1 | |
| A | * Absätze [0058], [0059]; Abbildungen 6A,6B * | 9-15 | |
| A,P | Rodriguez Gutierrez Gabriel ET AL: "An internet of things system for monitoring and control of mobile Diesel tanks", Sensoren und Messsysteme 2022, 11. Mai 2022 (2022-05-11), Seiten 503-504, XP093053914, Gefunden im Internet: URL:https://ieeexplore.ieee.org/stampPDF/getPDF.jsp?tp=&arnumber=9861938&ref=aHR0cHM6Ly9pZWVleHBsb3JlLmllZWUub3JnL2RvY3VtZW50Lzk4NjE5Mzg= [gefunden am 2023-06-13] * das ganze Dokument * | 1-15 | RECHERCHIERTE SACHGEBIETE (IPC) G01F |

−/−−

Der vorliegende Recherchenbericht wurde für alle Patentansprüche erstellt

| Recherchenort | Abschlußdatum der Recherche | Prüfer |
|---|---|---|
| Den Haag | 16. Juni 2023 | Reeb, Bertrand |

EPO FORM 1503 03.82 (P04C03)

Seite 1 von 2

**EUROPÄISCHER RECHERCHENBERICHT**

Europäisches Patentamt
European Patent Office
Office européen des brevets

Nummer der Anmeldung

EP 23 15 1522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GATTI RAVI ET AL: "Tracking of Fuel Road Tankers for Antipilferage and Antiadulteration", 2019 4TH INTERNATIONAL CONFERENCE ON RECENT TRENDS ON ELECTRONICS, INFORMATION, COMMUNICATION & TECHNOLOGY (RTEICT), IEEE, 17. Mai 2019 (2019-05-17), Seiten 1184-1187, XP033728454, DOI: 10.1109/RTEICT46194.2019.9016847 [gefunden am 2020-02-27] * das ganze Dokument * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 16. Juni 2023 | Reeb, Bertrand |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 1522

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2023

| Im Recherchenbericht angeführtes Patentdokument | Datum der Veröffentlichung | Mitglied(er) der Patentfamilie | Datum der Veröffentlichung |
|---|---|---|---|
| US 2020209016 A1 | 02-07-2020 | KEINE | |
| US 2019120678 A1 | 25-04-2019 | CN 109073583 A | 21-12-2018 |
| | | EP 3446112 A1 | 27-02-2019 |
| | | US 2019120678 A1 | 25-04-2019 |
| | | WO 2017184144 A1 | 26-10-2017 |
| WO 2021241628 A1 | 02-12-2021 | JP WO2021241628 A1 | 02-12-2021 |
| | | US 2023091344 A1 | 23-03-2023 |
| | | WO 2021241628 A1 | 02-12-2021 |
| US 2005229699 A1 | 20-10-2005 | CN 1690670 A | 02-11-2005 |
| | | CN 1714908 A | 04-01-2006 |
| | | US 2005229699 A1 | 20-10-2005 |

EPO FORM P0461

Für nähere Einzelheiten zu diesem Anhang : siehe Amtsblatt des Europäischen Patentamts, Nr.12/82